# DEMANDE DE BREVET EUROPEEN

(11) **EP 1 582 116 A1**
(43) Date de publication de la demande: **05.10.2005**
(21) Numéro de dépôt: 05290667.4
(22) Date de dépôt: 25.03.2005
(51) Int. Cl.: A47C 7/18

(54) **Procédé de réalisation d'une matelassure comprenant un élément de revêtement en cuir ayant subit un étirement**

(30) Priorité: 02.04.2004 FR 0450654
(71) Demandeur: Centre d'etude et de recherche pour l'automobile (CERA), 51100 Reims (FR)
(72) Inventeur: Harnay, Michel, 94500 Champigny sur Marne (FR)
(74) Mandataire: Sayettat, Julien Christian

(57) **Abrégé**

L'invention concerne un procédé de réalisation d'une matelassure (1) pourvue d'un revêtement (2, 6), comprenant les étapes suivantes :
- prévoir au moins un élément de revêtement en cuir (2) ;
- confectionner une coiffe comprenant ledit élément de revêtement en cuir (2), ledit élément étant associé à une couche souple (3) ;
- disposer la coiffe dans un moule ;
- injecter un mélange précurseur de mousse flexible à l'intérieur de la coiffe ;
- démouler la matelassure (1) obtenue après expansion de la mousse (4) ;
ledit procédé comprenant en outre, préalablement à la confection de la coiffe, une étape d'étirement du cuir.

L'invention concerne également une matelassure (1) réalisée par un tel procédé, ainsi qu'un siège de véhicule automobile comprenant une telle matelassure (1).

## Description

L'invention concerne un procédé de réalisation d'une matelassure en mousse flexible pourvue d'un revêtement, une matelassure obtenue par un tel procédé et un siège comprenant au moins une telle matelassure.

Plus particulièrement, le procédé prévoit que le revêtement comprenne au moins un élément de revêtement en cuir, ledit cuir subissant une étape d'étirement préalablement à son utilisation.

Il est connu de réaliser des matelassures de sièges, particulièrement pour des véhicules automobiles, comprenant un revêtement formé en tout ou partie de cuir, par des procédés de moulage dits « in situ ». Ces procédés consistent à disposer dans un moule une coiffe formée d'un ou plusieurs éléments de revêtement, associés entre eux le cas échéant, par exemple par couture, et à injecter un mélange précurseur de mousse flexible à l'intérieur de cette coiffe. Après expansion de la mousse, la matelassure obtenue est démoulée.

Tous les éléments de revêtement peuvent être formés de cuir ou seulement une partie d'entre eux.

Pour des raisons de confort et d'aspect, les éléments en cuir peuvent être associés en leur périphérie, sur leur face d'envers, à une couche souple, formée par exemple de mousse. Ladite couche permet d'assurer un confort d'approche et d'empêcher l'imprégnation du revêtement par la mousse flexible, ce qui conduirait à une rigidification locale dudit revêtement préjudiciable en terme de confort.

L'association de la couche souple en périphérie de l'élément en cuir confère au siège un aspect « sellerie » dans lequel le cuir n'est pas associé à la mousse flexible, par l'intermédiaire de la couche souple.

Un tel procédé est décrit par exemple dans la demande de brevet FR-2 833 218 qui prévoit par ailleurs d'associer à la couche souple, sur sa face destinée à être placée en regard de la mousse flexible, un support textile de renforcement visant à limiter le retrait de la mousse flexible après démoulage.

Par ailleurs, un deuxième support textile, servant à favoriser le glissement du cuir contre la couche souple, peut être prévu entre la couche souple et l'élément en cuir.

Ces réalisations, malgré leur pertinence, ne permettent d'éviter un phénomène naturel d'allongement du cuir, typiquement de l'ordre de 1%, au cours de l'utilisation de la matelassure, ceci plus particulièrement sous l'action conjuguée des basses températures et de l'humidité.

Il en résulte l'apparition de plis indésirables, tant du point de vue esthétique que de celui de la résistance du cuir à l'usure, favorisée au niveau des plis.

L'invention a pour but de pallier cet inconvénient.

A cet effet, et selon un premier aspect, l'invention propose un procédé de réalisation d'une matelassure en mousse flexible pourvue d'un revêtement sur au moins une partie de sa surface, ledit procédé comprenant les étapes suivantes :
- prévoir au moins un élément de revêtement en cuir ;
- confectionner une coiffe comprenant ledit élément de revêtement en cuir, ledit élément étant associé en son envers et sur sa périphérie à une couche souple, notamment formée de mousse ;
- disposer la coiffe dans un moule, l'élément de revêtement étant en regard des parois dudit moule ;
- injecter un mélange précurseur de mousse flexible à l'intérieur de la coiffe ;
- démouler la matelassure obtenue après expansion de la mousse ;
ledit procédé comprenant en outre, préalablement à la confection de la coiffe, une étape d'étirement du cuir.

Le cuir une fois étiré, d'un allongement supérieur ou égal à son allongement naturel, reste sensiblement dans cette configuration. Il n'est alors plus sujet à la formation de plis au cours de l'utilisation de la matelassure, et peut en outre avoir tendance à se rétracter légèrement ce qui lui confère une tension optimale sur la matelassure.

Selon une réalisation, la coiffe peut être composée uniquement d'un élément de revêtement en cuir, associé à la couche souple en sa périphérie, par exemple par couture, ladite couche pouvant se présenter sous la forme d'une couche de mousse imperméable à la mousse flexible, afin d'éviter une imprégnation du cuir par la mousse et d'assurer un bon confort d'approche.

Selon une autre réalisation, la confection de la coiffe prévoit d'associer au moins un élément de revêtement en cuir à au moins un autre élément de revêtement, cet autre élément pouvant être réalisé en un matériau autre que le cuir, par exemple en textile ou en peau synthétique.

Afin d'éviter une imprégnation de matériaux comme les textiles par la mousse flexible, voire la traversée de la mousse à travers eux, lesdits matériaux peuvent être associés en leur envers, en périphérie ou sur toute leur surface, à une couche souple similaire à celle utilisée pour l'élément de revêtement en cuir.

Dans le cas d'une coiffe composée de plusieurs éléments, la couche souple peut être associée à l'élément de revêtement en cuir lors de la confection de la coiffe, par exemple par les coutures réalisées lors de cette confection.

Le cuir peut être soumis plus particulièrement à un étirement selon au moins sa longueur et sa largeur permettant d'augmenter ladite longueur et ladite largeur de 1 à 5%. Pour ce faire, le cuir peut être disposé dans deux paires de pinces rectilignes, de dimensions adaptées à celles de la pièce en cuir, chaque pince exerçant un étirement respectivement sur chacun des bords de la pièce.

Le nombre de couples de pinces peut être supérieur à deux de sorte à réaliser un étirement sensiblement radial multidirectionnel du cuir, et à optimiser ainsi ses caractéristiques une fois intégré dans la matelassure.

L'élément de revêtement en cuir est par exemple réalisé par découpe d'une pièce de cuir.

Selon une réalisation, le cuir est étiré avant le découpage de la pièce de cuir, c'est à dire lorsqu'il est toujours sous forme de peau.

En variante, le cuir est étiré après le découpage de la pièce de cuir, en intégrant toutefois les nouvelles dimensions de l'élément de revêtement dues à cet étirement dans la définition du gabarit de découpe du cuir, ce qui peut permettre d'affiner les paramètres d'étirement en fonction des contraintes auxquelles est soumis chaque élément de revêtement en cuir.

Afin de contenir le retrait de la mousse flexible à proximité du cuir, un support textile de renforcement peut être associé à la couche souple sur sa surface destinée à être disposée en regard de la mousse flexible, avant l'association de ladite couche souple avec l'élément de revêtement en cuir.

En outre, un deuxième support textile peut être disposé entre la couche souple et l'élément de revêtement en cuir, préalablement à leur association, ceci afin de favoriser le glissement du cuir sur la couche souple.

Selon un deuxième aspect, l'invention propose une matelassure comprenant au moins un élément de revêtement en cuir associé en sa périphérie à une couche souple, ladite matelassure étant réalisée selon un procédé tel que décrit ci-dessus.

Selon un troisième aspect, l'invention propose un siège automobile comprenant au moins une matelassure telle que décrite ci-dessus.

D'autres particularités et avantages de l'invention apparaîtront dans la description qui suit, faite en référence aux figures jointes dans lesquelles :
- la figure 1 est une coupe schématique d'une matelassure de siège, réalisée par un procédé selon l'invention ;
- les figures 2a, 2b et 2c sont des représentations schématiques vues de dessus, montrant chacune un agencement des moyens d'étirement du cuir disposés sur une peau à étirer.

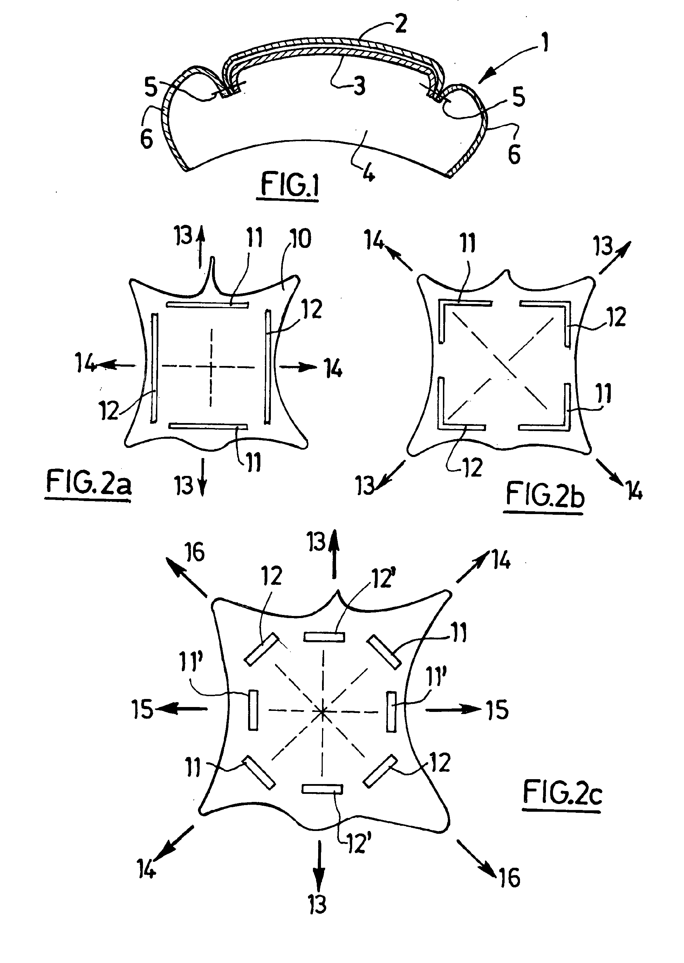

En référence à la figure 1, on décrit à présent une matelassure de siège 1 comprenant un élément de revêtement en cuir 2 associé sur sa face inférieure et en sa périphérie à une couche souple 3 au moyen de coutures 5, utilisées par ailleurs pour associer des éléments de revêtement 6 à l'élément 2. L'élément de revêtement en cuir 2 est par exemple destiné à former la surface d'appui d'un occupant de siège de véhicule automobile.

La matelassure 1 comprend en outre un corps en mousse 4, associé notamment à une des faces de la couche 3.

Les éléments 6 peuvent être en cuir ou tout autre matériau de revêtement. Ils peuvent être associés, de la même façon que l'élément 2, à une couche souple 3 non représentée.

En variante, les éléments 6 peuvent être associés sur toute leur surface à la couche 3, par exemple par flammage ou collage.

La couche souple 3 peut être associée, sur sa face qui est en regard de la mousse 4, à un support textile de renforcement non représenté.

De manière à favoriser le glissement du cuir sur la couche 3, cette dernière peut être associée, sur sa face qui est en regard du cuir, à un deuxième support textile non représenté.

En référence aux figures 2a, 2b et 2c, on décrit à présent divers agencements de moyens d'étirement du cuir comprenant des pinces de différentes formes.

Une pièce de cuir 10, représentée ici sous forme de peau de forme sensiblement rectangulaire avant découpe en éléments de revêtement en cuir 2, est étirée par des jeux de pinces 11, 11',12,12' réalisant un étirement selon au moins sa longueur et sa largeur. Les directions de cet étirement sont représentées par des doubles flèches 13, 14, 15 et 16.

Les figures 2a et 2b représentent respectivement des agencements comprenant deux paires de pinces 11,12, respectivement rectilignes et en forme d'équerre, réalisant un étirement du cuir selon la longueur et la largeur de la pièce de cuir (10).

La figure 2c représente un agencement comprenant une pluralité de paires de pinces 11, 11', 12, 12' de sorte à réaliser un étirement sensiblement radial multidirectionnel selon des directions représentées par les doubles flèches 13,14,15 et16.

## Revendications

1. Procédé de réalisation d'une matelassure (1) en mousse flexible (4) pourvue d'un revêtement (2, 6) sur au moins une partie de sa surface, ledit procédé comprenant les étapes suivantes :
• prévoir au moins un élément de revêtement en cuir (2) ;
• confectionner une coiffe comprenant ledit élément de revêtement en cuir (2), ledit élément étant associé en son envers et sur sa périphérie à une couche souple (3), notamment formée de mousse ;
• disposer la coiffe dans un moule, ledit élément de revêtement en cuir étant en regard des parois dudit moule ;
• injecter un mélange précurseur de mousse flexible à l'intérieur de la coiffe ;
• démouler la matelassure (1) obtenue après expansion de la mousse (4) ;
ledit procédé étant **caractérisé en ce qu'**il comprend en outre, préalablement à la confection de la coiffe, une étape d'étirement du cuir.

2. Procédé selon la revendication 1, **caractérisé en ce que** la confection de la coiffe prévoit d'associer au moins un élément de revêtement en cuir (2) à au moins un autre élément de revêtement (6).

3. Procédé selon l'une des revendications 1 ou 2, **caractérisé en ce que** le cuir est soumis à un étirement selon au moins sa longueur et sa largeur permettant d'augmenter ladite longueur et ladite largeur de 1 à 5%.

4. Procédé selon l'une quelconque des revendications 1 à 3, **caractérisé en ce que** l'élément de revêtement en cuir (2) est réalisé par découpe d'une pièce de cuir (10).

5. Procédé selon la revendication 4, **caractérisé en ce que** le cuir est étiré avant le découpage de la pièce de cuir (10).

6. Procédé selon la revendication 4, **caractérisé en ce que** le cuir est étiré après le découpage de la pièce de cuir (10).

7. Procédé selon l'une quelconque des revendications 1 à 6, **caractérisé en ce qu'**un support textile de renforcement est associé à la couche souple (3) sur sa surface destinée à être disposée en regard de la mousse flexible (4), avant l'association de ladite couche souple avec l'élément de revêtement en cuir (2).

8. Procédé selon la revendication 7, **caractérisé en ce qu'**un deuxième support textile est disposé entre la couche souple (3) et l'élément de revêtement en cuir (2), préalablement à leur association.

9. Matelassure (1) comprenant au moins un élément de revêtement en cuir (2) associé en sa périphérie à une couche souple (3), ladite matelassure étant réalisée par le procédé selon l'une quelconque des revendications 1 à 8.

10. Siège automobile comprenant au moins une matelassure (1) selon la revendication 9.
